# DEMANDE DE BREVET EUROPEEN

(11) **EP 0 921 662 A2**
(43) Date de publication de la demande: **09.06.1999**
(21) Numéro de dépôt: 98402866.2
(22) Date de dépôt: 19.11.1998
(51) Int. Cl.: H04L 12/56

(54) **Procédé d'allocation de canaux de transmission à une station, en mode paquet**

(30) Priorité: 28.11.1997 FR 9815044
(71) Demandeur: ALCATEL, 75008 Paris (FR)
(72) Inventeur: Dupuy, Pierre, 75017 Paris (FR)
(74) Mandataire: El Manouni, Josiane

(57) **Abrégé**

Procédé d'allocation de canaux de transmission à une station mobile, dans un réseau de radiocommunications mobiles du type à accès multiple par multiplexage de canaux de transmission, et en mode paquet, pour la transmission de données dites de contrôle dans un sens dit montant, les canaux alloués pour la transmission de données dans le sens montant étant indiqués dans des autorisations d'émission reçues dans le sens descendant, et lesdites autorisations d'émission contenant d'une part un champ d'information dit principal, indiquant seulement, dans le cas de transmission de données de contrôle, les canaux réservés pour une telle transmission de données de contrôle par des stations mobiles, sans indiquer laquelle de ces stations mobiles est autorisée à transmettre, et d'autre part un champ d'information dit complémentaire, utilisé dans le cas de transmission de données utiles, et ce procédé étant essentiellement caractérisé en ce que ledit champ d'information complémentaire est également utilisé, dans le cas de transmission de données de contrôle, pour permettre d'indiquer laquelle des stations mobiles est autorisée à transmettre des données de contrôle, et dans lesquels des canaux réservés à la transmission de données de contrôle elle est autorisée à transmettre.

## Description

La présente invention concerne d'une manière générale les techniques d'allocation de ressources de transmission dans les réseaux de télécommunications.

On sait qu'il existe essentiellement deux modes de transmission dans les réseaux de télécommunications :
- un mode de transmission appelé mode circuit, dans lequel les ressources de transmission sont allouées pour la durée d'une communication, qu'il y ait ou non transmission d'informations,
- un mode de transmission appelé mode paquet, dans lequel l'allocation de ressources de transmission est susceptible d'être modifiée en cours de communication, ce qui permet un meilleur partage des ressources de transmission entre plusieurs communications, en fonction des besoins instantanés de chacune d'elles.

Le mode circuit est plus particulièrement adapté aux communications vocales, tandis que le mode paquet est plus particulièrement adapté à la transmission de données, notamment dans le cas de débits de transmission irréguliers dans le temps, et de plus dissymétriques dans les deux sens de transmission, ce qui est notamment le cas lorsque le réseau est utilisé pour réaliser une transmission de données entre un terminal de télécommunications et un serveur informatique.

La présente invention concerne plus particulièrement l'utilisation du mode paquet dans les réseaux de radiocommunications mobiles, une telle utilisation étant aussi connue sous le nom de GPRS ("General Packet Radio Service"), pour les réseaux de radiocommunications mobiles de type GSM ("Global System for Mobile communications").

On rappelle que le réseau GSM est un réseau du type à accès multiple par répartition temporelle (ou TDMA, pour "Time Division Multiple Access") dans lequel les ressources de transmission sont constituées par des canaux temporels ou intervalles de temps, de trames utilisées d'une part pour la transmission dans un sens dit descendant, à savoir du réseau vers la station mobile, et d'autre part pour la transmission dans un sens dit montant, à savoir de la station mobile vers le réseau.

On rappelle en outre que l'unité élémentaire pour la transmission de données en mode paquet dans un tel réseau est constituée par un bloc de données destiné à être transmis sur des intervalles de temps de plusieurs trames consécutives.

Pour la transmission de données en mode paquet dans un tel réseau, les canaux alloués à une station mobile sont susceptibles de changer d'un bloc à un autre pendant une même communication. Dans le cas du service GPRS, dans le sens descendant, les canaux alloués à une station mobile sont reconnus par cette station mobile au fait que les blocs correspondants contiennent une adresse attribuée à cette station mobile, et, dans le sens montant, une station mobile est informée des canaux qui lui sont alloués, pour une trame donnée, en lui adressant, dans le sens descendant, pendant la trame précédente, et sur chacun de ces mêmes canaux, une autorisation d'émission, ces autorisations d'émission étant en pratique contenues dans un champ d'information particulier des blocs, appelé USF (pour: "Uplink Status Flag").

Les données émises par une station mobile dans le sens montant peuvent par ailleurs être soit des données utiles, soit des données qui seront aussi appelées par la suite données de contrôle, et qui peuvent être constituées notamment par des réponses à des messages dits de contrôle transmis dans le sens descendant, et notamment par des acquittements de données utiles transmises dans le sens descendant.

En effet, dans le cas où une station mobile reçoit des données utiles, elle est régulièrement invitée par le réseau à transmettre des acquittements sur les données ainsi reçues, afin de retransmettre si nécessaire des données lorsqu'elles ont été mal reçues.

Un acquittement est plus précisément transmis en réponse à une demande d'acquittement contenue dans un champ d'information particulier des blocs descendants appelé "S/P".

Par ailleurs, le champ d'information USF contient une information relative aux stations mobiles autorisées à émettre des données dans le sens montant. Pour tenir compte du fait que ce champ d'informations USF est de longueur limitée, et du fait que les acquittements ne constituent pas la majorité des cas de transmission de données, cette information indique, dans le cas où les données transmises dans le sens montant par la station mobile sont des données utiles, celle des stations mobiles qui est ainsi autorisée à transmettre, mais indique seulement, dans le cas où les données transmises dans le sens montant par la station mobile correspondent à un acquittement, que les canaux correspondants sont réservés pour la transmission d'acquittements par les stations mobiles, sans indiquer laquelle de ces stations mobiles est autorisée à transmettre de tels acquittements.

Dans ces conditions, pour l'allocation de canaux pour les acquittements dans le sens montant, il est nécessaire de prévoir des moyens spécifiques pour indiquer quels canaux sont alloués, et à quelle station mobile.

Il est connu, pour résoudre ce problème, d'adjoindre à une demande d'acquittement par une station mobile, transmise dans un bloc descendant, des informations permettant d'identifier les canaux alloués pour un tel acquittement par cette station mobile, ces informations étant plus précisément transmises dans un champ d'informations particulier appelé "RRBF" (pour: "Relative Reserved Block Frame").

Une telle solution a cependant pour inconvénient de nécessiter une réservation systématique d'emplacements pour la transmission de telles informations, d'où une mauvaise utilisation des ressources de transmission disponibles, compte tenu du fait que les acquittements ne constituent pas la majorité des cas de transmission de données.

La présente invention a notamment pour objet un procédé d'allocation permettant d'éviter cet inconvénient.

Il est par ailleurs connu de prévoir, dans le champ d'information USF, outre un champ d'information dit ici principal, utilisé pour le cas de données utiles comme pour le cas d'acquittements, et contenant les informations relatives aux stations mobiles autorisées à émettre, un champ d'information dit ici complémentaire qui n'est utilisé que pour le cas de données utiles. Ce champ d'informations complémentaires est plus précisément destiné à indiquer, dans le cas où l'autorisation d'émission donnée par le champ USF est valable pour un ensemble de canaux au sein d'une même trame, sur lesquels de ces canaux la station mobile est effectivement autorisée à émettre des données utiles.

La présente invention met à profit le fait que ce champ d'informations complémentaires, présent mais inutilisé pour le cas d'acquittements (ou plus généralement de données de contrôle) est alors disponible pour accueillir d'autres informations, pour résoudre de façon simple et économique le problème évoqué plus haut.

La présente invention a ainsi pour objet un procédé d'allocation de canaux de transmission à une station mobile, dans un réseau de radiocommunications mobiles du type à accès multiple par multiplexage de canaux de transmission, et en mode paquet, pour la transmission de données dites de contrôle dans un sens dit montant, les canaux alloués pour la transmission de données dans le sens montant étant indiqués dans des autorisations d'émission reçues dans le sens descendant, et lesdites autorisations d'émission contenant d'une part un champ d'information dit principal, indiquant seulement, dans le cas de transmission de données de contrôle, les canaux réservés pour une telle transmission de données de contrôle par des stations mobiles, Sans indiquer laquelle de ces stations mobiles est autorisée à transmettre, et d'autre part un champ d'information dit complémentaire, utilisé dans le cas de transmission de données utiles, et ce procédé étant essentiellement caractérisé en ce que ledit champ d'information complémentaire est également utilisé, dans le cas de transmission de données de contrôle, pour permettre d'indiquer laquelle des stations mobiles est autorisée à transmettre des données de contrôle, et dans lesquels des canaux réservés à la transmission de données de contrôle elle est autorisée à transmettre.

Suivant une autre caractéristique, ledit champ d'information complémentaire indique celle des stations mobiles qui est autorisée à transmettre des données de contrôle, dans ceux des canaux réservés qui sont indiqués par l'autorisation d'émission contenant ce champ d'information complémentaire.

Une telle caractéristique convient ainsi plus particulièrement au cas où le champ d'information complémentaire a une longueur suffisante, compte tenu du nombre de stations mobiles susceptibles de transmettre de telles données de contrôle.

Suivant une autre caractéristique, celle des stations mobiles qui est autorisée à transmettre des données de contrôle est indiquée, associée à une demande de transmission de données de contrôle destinée à cette station mobile, et ceux des canaux réservés pour la transmission de données de contrôle, qui sont réservés à cette station mobile, sont indiqués par détection de leurs instants d'occurrence, indiqués eux-mêmes, par référence aux instants d'occurrence des canaux descendants contenant ladite demande de transmission de données de contrôle, dans ledit champ d'information complémentaire.

Une telle caractéristique convient ainsi plus particulièrement au cas où le champ d'information complémentaire a une longueur insuffisante, compte tenu du nombre de stations mobiles susceptibles de transmettre de telles données de contrôle.

D'autres objets et caractéristiques de la présente invention apparaîtront à la lecture de la description suivante d'exemples de réalisation, faite en relation avec les dessins ci-annexés, dans lesquels:
- la figure 1 est un diagramme destiné à illustrer les étapes du procédé suivant l'invention, vues de la station mobile, selon un premier exemple de réalisation de ce procédé,
- la figure 2 est un diagramme destiné à illustrer les étapes du procédé suivant l'invention, vues de la station mobile, selon un deuxième exemple de réalisation de ce procédé,
- la figure 3 est un diagramme destiné à illustrer une variante du procédé selon la figure 2, applicable également au procédé selon la figure 1,
- la figure 4 est un schéma de principe d'une station mobile, pour la mise en oeuvre du procédé d'allocation suivant l'invention,
- la figure 5 est un schéma de principe d'une station fixe (ou station de base) d'un réseau de radiocommunications mobiles, pour la mise en oeuvre du procédé d'allocation suivant l'invention.

La présente invention concerne donc un procédé d'allocation de canaux de transmission à une station mobile, dans un réseau de radiocommunications mobiles du type à accès multiple par multiplexage de canaux de transmission, et en mode paquet, pour la transmission de données dites de contrôle dans un sens dit montant, les canaux alloués pour la transmission de données dans le sens montant étant indiqués dans des autorisations d'émission reçues dans le sens descendant, et lesdites autorisations d'émission contenant d'une part un champ d'information dit principal, indiquant seulement, dans le cas de transmission de données de contrôle, les canaux réservés pour une telle transmission de données de contrôle par des stations mobiles, sans indiquer laquelle de ces stations mobiles est autorisée à transmettre, et d'autre part un champ d'information dit complémentaire, utilisé dans le cas de transmission de données utiles.

Suivant l'invention, ledit champ d'information complémentaire est également utilisé, dans le cas de transmission de données de contrôle, pour permettre d'indiquer laquelle des stations mobiles est autorisée à transmettre des données de contrôle, et dans lesquels des canaux réservés à la transmission de données de contrôle elle est autorisée à transmettre.

Suivant un premier exemple de réalisation de ce procédé, ledit champ d'information complémentaire indique celle des stations mobiles qui est autorisée à transmettre des données de contrôle, dans ceux des canaux réservés qui sont indiqués par l'autorisation d'émission contenant ce champ d'information complémentaire.

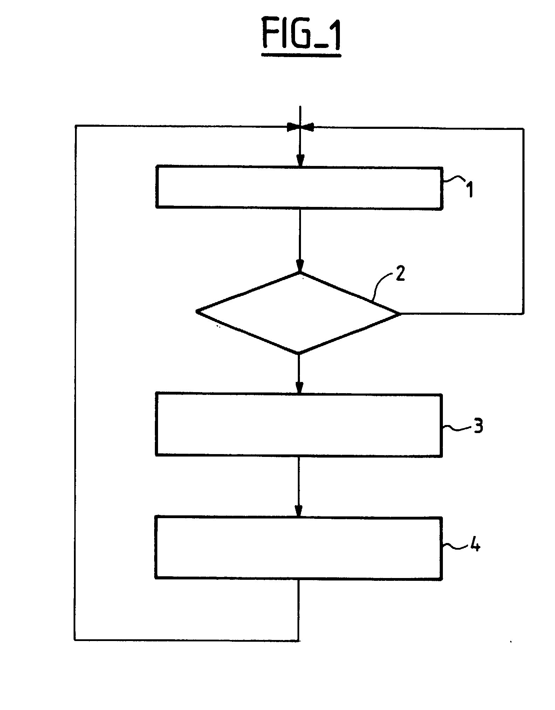

Ce premier exemple correspond plus particulièrement au procédé illustré sur la figure 1.

Le procédé illustré sur la figure 1 comporte ainsi, pour chaque bloc de données reçu, et à titre d'exemple en supposant que les données de contrôle sont constituées par des acquittements:
- un décodage du champ principal d'information du champ USF contenu dans ce bloc de données (étape 1)
- une comparaison de la valeur "v" obtenue à l'issue de ce décodage à une valeur V correspondant au cas de canaux réservés aux acquittements par les stations mobiles (étape 2) :
   -- si "v" est égal à V, un décodage du champ complémentaire d'information du champ USF contenu dans ce bloc de données (étape 3), et une commande d'acquittement dans les canaux correspondants, par la station mobile telle qu'indiquée à l'issue du décodage suivant l'étape 3,
   -- si "v" est différent de V, une réitération des mêmes étapes pour le bloc de données reçu suivant.

Suivant un deuxième exemple de réalisation du procédé suivant l'invention, celle des stations mobiles qui est autorisée à transmettre des données de contrôle est indiquée, associée à une demande de transmission de données de contrôle destinée à cette station mobile, et ceux des canaux réservés pour la transmission de données de contrôle, qui sont réservés à cette station mobile, sont indiqués par détection de leurs instants d'occurrence, indiqués eux-mêmes dans ledit champ d'information complémentaire, par référence aux instants d'occurrence des canaux descendants contenant ladite demande de transmission de données de contrôle.

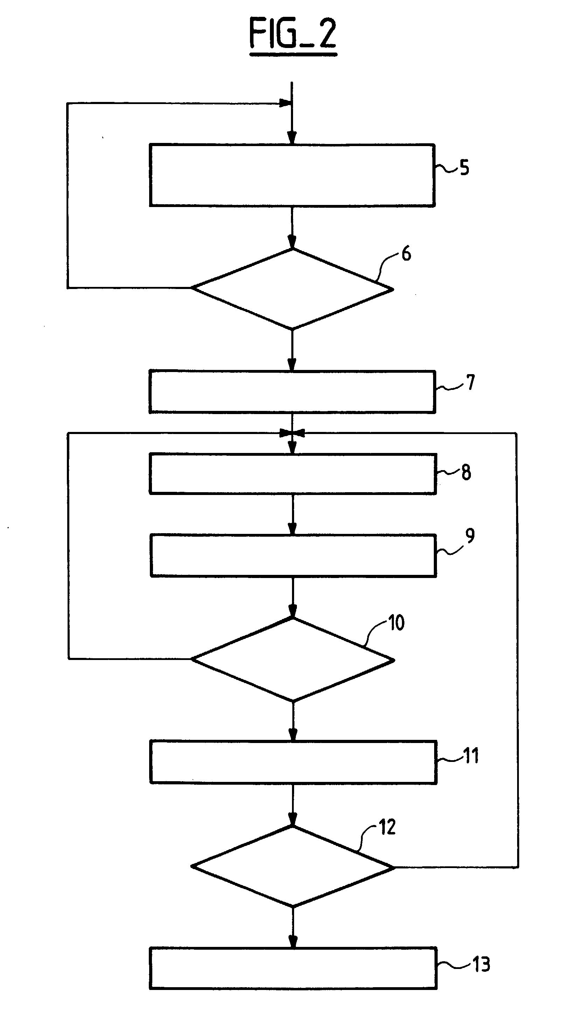

Ce deuxième exemple correspond plus particulièrement au procédé illustré sur la figure 2.

Le procédé illustré sur la figure 2 comporte ainsi, pour chaque bloc de données reçu, et à titre d'exemple pour le cas de données de contrôle constituées par des acquittements:
- un décodage du champ d'informations de demande d'acquittement par une station mobile, contenu dans ce bloc (étape 5),
- une comparaison de la valeur "vl" obtenue à l'issue de ce décodage à une valeur V1 correspondant au cas de demande d'acquittement (étape 6),
- si "v1" est égal à V1:
   -- une mémorisation du numéro "m" du bloc où a été reçue cette demande (étape 7), et, pour chaque bloc reçu suivant (étape 8), de numéro courant "n":
      --- un décodage du champ principal d'information du champ USF contenu dans ce bloc de numéro courant "n" (étape 9)
      --- une comparaison de la valeur "v" obtenue à l'issue de ce décodage à la valeur V réservée aux cas d'acquittement par les stations mobiles (étape 10) :
      --- si "v" est égal à V, un décodage du champ complémentaire d'information du champ USF contenu dans ce bloc de n° courant "n" (étape 11), et une comparaison de la valeur "n" courante à la valeur "m+p", où "p" désigne la valeur obtenue à l'issue du décodage suivant l'étape 11 (étape 12),
      --- si "n est égal à "m+p", un acquittement par la station mobile dans le bloc montant correspondant (étape 13)
      --- si "n" est différent de "m+p", une réitération des étapes 8 à 12 pour le bloc reçu suivant,
   -- si "v" est différent de V, une réitération des étapes 8 à 10 pour le bloc reçu suivant,
   -- si "v1" est différent de V1, une réitération des étapes 5 à 6 pour le bloc reçu suivant.

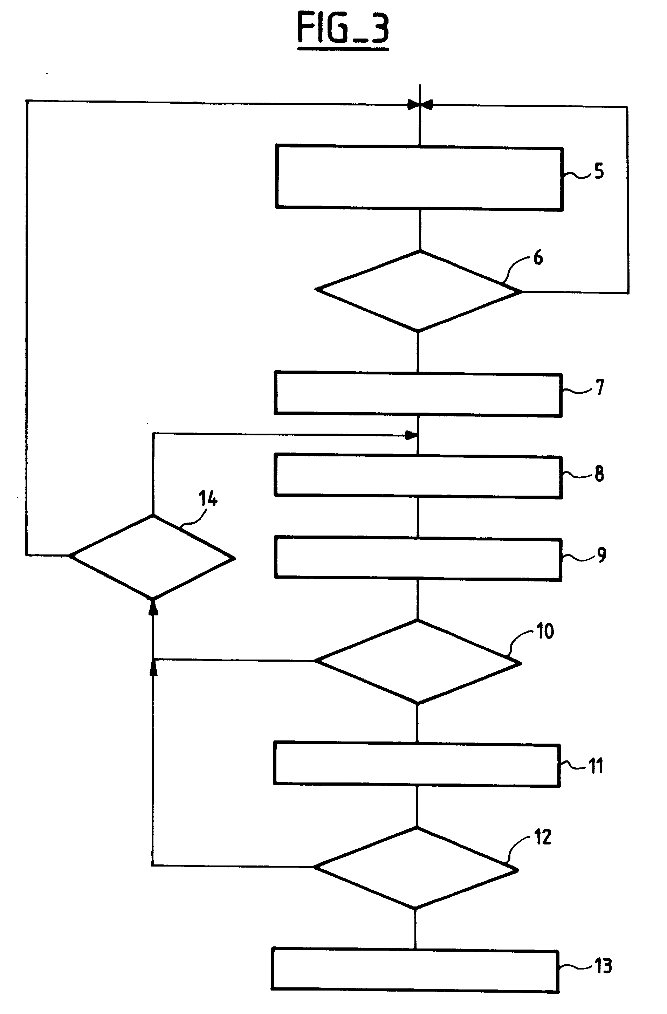

La variante illustrée sur la figure 3 diffère de celle illustrée sur la figure 2 de la façon suivante:
--- si "n" est différent de "m+p", un passage à une étape 14,
   -- si "v" est différent de V, un passage à l'étape 14,
      - à l'étape 14, si "n" est inférieur ou égal à un nombre maximum d'attente, une réitération des étapes 8 et suivantes,
      - à l'étape 14, si "n" est supérieur à un nombre maximum d'attente, abandon de l'attente et retour à l'étape 5.

Cette variante permet essentiellement de limiter dans le temps l'attente de l'autorisation à émettre, afin d'éviter de rester en attente permanente en cas d'erreur de réception qui ferait manquer l'autorisation à émettre. Cette variante est également applicable à la figure 1, bien que non illustré spécifiquement.

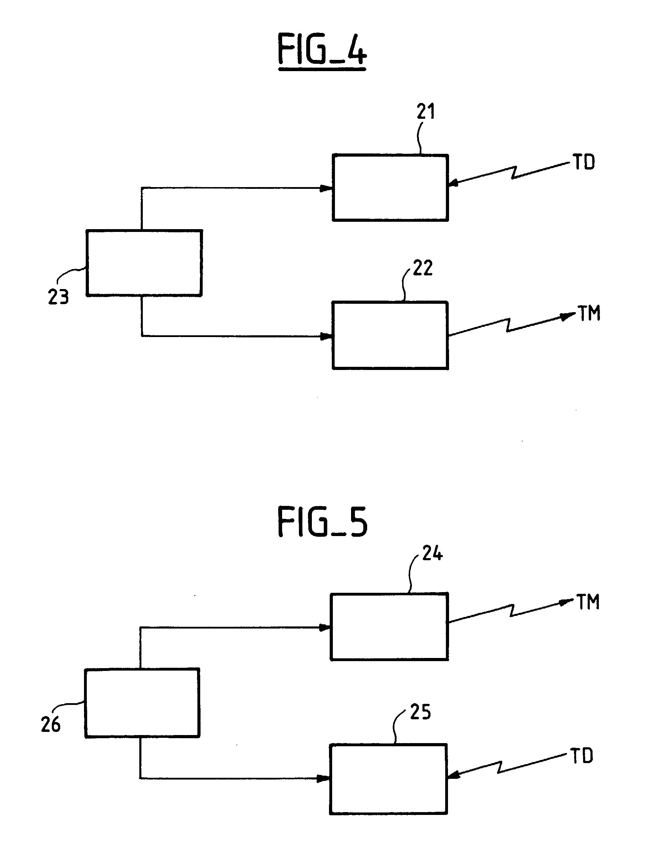

Le schéma de la figure 4 est destiné à illustrer le type de moyens utilisés dans une station mobile pour utiliser le procédé d'allocation suivant l'invention.

Une telle station mobile comporte:
- des moyens 21 de réception de canaux de transmission sur des trames descendantes TD,
- des moyens 22 d'émission de canaux de transmission sur des trames montantes TM,
- des moyens 23 de commande de ces moyens d'émission et de réception, de manière à permettre un fonctionnement selon le procédé ainsi décrit.

Le schéma de la figure 5 est destiné à illustrer le type de moyens utilisés dans une une station fixe (appelée aussi station de base) d'un réseau de télécommunications mobiles, pour utiliser le procédé d'allocation suivant l'invention.

Une telle station fixe comporte:
- des moyens 24 d'émission de données dans des canaux de transmission sur lesdites trames descendantes TD,
- des moyens 25 de réception de canaux de transmission sur lesdites trames montantes TM,
- des moyens 26 de commande de ces moyens d'émission et de réception, de manière à permettre un fonctionnement selon le procédé ainsi décrit.

Les moyens d'émission (22 ou 24) ou de réception (21 ou 23) peuvent être des moyens classiques qui ne nécessitent donc pas d'être redécrits ici.

La réalisation particulière des moyens de commande (23 ou 26) de manière à faire fonctionner l'ensemble selon le procédé ainsi décrit, ne posant pas de problème particulier à l'homme du métier, ne sera pas non plus décrite de manière plus détaillée.

## Revendications

1. Procédé d'allocation de canaux de transmission à une station mobile, dans un réseau de radiocommunications mobiles du type à accès multiple par multiplexage de canaux de transmission, et en mode paquet, pour la transmission de données dites de contrôle dans un sens dit montant, les canaux alloués pour la transmission de données dans le sens montant étant indiqués dans des autorisations d'émission reçues dans le sens descendant, et lesdites autorisations d'émission contenant d'une part un champ d'information dit principal, indiquant seulement, dans le cas de transmission de données de contrôle, les canaux réservés pour une telle transmission de données de contrôle par des stations mobiles, sans indiquer laquelle de ces stations mobiles est autorisée à transmettre, et d'autre part un champ d'information dit complémentaire, utilisé dans le cas de transmission de données utiles, et ce procédé étant caractérisé en ce que ledit champ d'information complémentaire est également utilisé, dans le cas de transmission de données de contrôle, pour permettre d'indiquer laquelle des stations mobiles est autorisée à transmettre des données de contrôle, et dans lesquels des canaux réservés à la transmission de données de contrôle elle est autorisée à transmettre.

2. Procédé selon la revendication 1, caractérisé en ce que ledit champ d'information complémentaire indique celle des stations mobiles qui est autorisée à transmettre des données de contrôle, dans ceux des canaux réservés qui sont indiqués par l'autorisation d'émission contenant ce champ d'information complémentaire.

3. Procédé selon la revendication 2, caractérisé en ce que celle des stations mobiles qui est autorisée à transmettre des données de contrôle est indiquée, associée à une demande de transmission de données de contrôle destinée à cette station mobile, et ceux des canaux réservés pour la transmission de données de contrôle, qui sont réservés à cette station mobile, sont indiqués par détection de leurs instants d'occurrence, indiqués eux-mêmes dans ledit champ d'information complémentaire, par référence aux instants d'occurrence des canaux descendants contenant ladite demande de transmission de données de contrôle.

4. Station mobile, pour la mise en oeuvre d'un procédé d'allocation suivant l'une des revendications 1 à 3, caractérisée en ce qu'elle comporte:
- des moyens (21) de réception de canaux de transmission sur des trames descendantes (TD),
- des moyens (22) d'émission de canaux de transmission sur des trames montantes,
- des moyens (23) de commande de ces moyens d'émission et de réception, de manière à permettre un fonctionnement selon ledit procédé.

5. Station fixe pour réseau de télécommunications, pour la mise en oeuvre du procédé suivant l'une des revendications 1 à 3, caractérisée en ce qu'elle comporte:
- des moyens (24) d'émission de données dans des canaux de transmission sur des trames descendantes,
- des moyens (25) de réception de canaux de transmission sur des trames montantes,
- des moyens (26) de commande de ces moyens d'émission et de réception, de manière à permettre un fonctionnement selon ledit procédé.
